# FASCICULE DE BREVET EUROPEEN

(11) **EP 1 217 831 B1**
(45) Date de publication et mention de la délivrance du brevet: **05.11.2003**
(21) Numéro de dépôt: 01403154.6
(22) Date de dépôt: 06.12.2001
(51) Int. Cl.: H04N 5/445, H04N 7/088

(54) **Procédé et dispositif de filtrage des données relatives au guide électronique de programmes d'un téléviseur**
Verfahren und Anordnung zur Filterung von Daten bezüglich einer elektronischen Programmübersicht für Fernseher
Method and device for filtering data related to a television electronic program guide

(30) Priorité: 22.12.2000 FR 0016873
(43) Date de publication de la demande: 26.06.2002
(73) Titulaire: STMicroelectronics S.A., 92120 Montrouge (FR)
(72) Inventeur: Voyer, Pascal, 75116 Paris (FR); Mondeteguy, Marc, 75116 Paris (FR)
(74) Mandataire: Ballot, Paul

(56) Documents cités:
- US-A- 5 917 481
- ETSI; SOPHIA ANTIPOLIS; FR: "ETS 300 707; Electronic Programme Guide; Protocol for a TV Guide using electronic data transmission" EUROPEAN TELECOMMUNICATION STANDARD, XX, XX, mai 1997 (1997-05), pages 1-89, XP002177519

## Description

L'invention concerne généralement les récepteurs de télévision ou téléviseurs et, plus particulièrement, les téléviseurs qui sont équipés d'un dispositif permettant de recevoir des informations ou données relatives aux programmes des chaînes et de les présenter sur l'écran du téléviseur à la demande du téléspectateur.

Le procédé et le dispositif de l'invention sont mis en oeuvre lors de la réception des informations ou données en vue de les filtrer et d'enregistrer les données filtrées dans une mémoire prévue à cet effet.

Une image de télévision ou image vidéo est constituée de deux trames de lignes entrelacées et l'intervalle de temps qui s'écoule entre la fin d'une trame et le début de la suivante, appelé retour de trame, ne comporte pas de signal vidéo.

Aussi, il a été proposé d'utiliser ce retour de trame pour transmettre des informations, par exemple du télétexte.

Il est actuellement proposé d'utiliser ces intervalles de temps pour transmettre les programmes de certaines chaînes et ainsi réaliser un guide électronique des programmes de ces chaînes, connu sous l'acronyme EPG pour l'expression anglo-saxonne "Electronic Program Guide".

Ce guide électronique des programmes est transmis en deux parties, un SOMMAIRE et un CONTENU, le SOMMAIRE identifiant chaque chaîne par un code CNI (acronyme de l'expression anglo-saxonne "Country Network Identification) et indiquant, pour chaque chaîne, des références ou numéros ID identifiant des blocs de données dont le contenu est relatif au programme de la chaîne. Ces références ID sont classées dans un ordre croissant et identifient, par exemple, sous la forme d'un couple de références ID le premier bloc de données et le dernier bloc de données affectés à une chaîne du SOMMAIRE. Ce couple définit une série de numéros d'identification pour chaque chaîne.

Actuellement en France, deux chaînes proposent un tel guide non seulement pour leur programme mais aussi pour les programmes d'autres chaînes, par exemple celles en langue française. Un tel service pourrait être d'ailleurs fourni par chaque chaîne vis-à-vis d'autres chaînes.

Pour fournir un tel service, le téléviseur doit être équipé d'un dispositif comprenant essentiellement une mémoire dans laquelle sont enregistrées les informations reçues pendant le retour de trame et relatives au guide électronique de programmes. Cette mémoire est ensuite "gérée" par des programmes et algorithmes en vue de présenter les informations selon des critères définis par le téléspectateur, par exemple le programme d'une chaîne, les films présentés par les chaînes à une date déterminée, etc ....

Il a été déterminé que la taille de la mémoire pour enregistrer le programme d'une chaîne pendant une semaine est d'environ 256 kilooctets, soit deux à trois mégaoctets pour une dizaine de chaînes, sans compter la mémoire du microprocesseur pour traiter les informations en vue de les présenter selon les critères choisis. Ces chiffres montrent que la taille de la mémoire limite le service qui peut être proposé dans ce domaine au téléspectateur.

Un but de la présente invention est donc de mettre en oeuvre un procédé et de réaliser un dispositif de filtrage des informations reçues afin de ne retenir que celles qui présentent de l'intérêt au téléspectateur selon certains critères, ce qui permet de s'adapter à la taille de la mémoire.

L'invention concerne un procédé de filtrage des données relatives à un guide électronique de programmes dans un téléviseur et transmises sous la forme d'un SOMMAIRE et d'un CONTENU, ledit téléviseur comprenant un dispositif de recherche automatique de chaînes de télévision fournissant dans une première mémoire une liste des codes CNI de tout ou partie des chaînes reçues par le téléviseur, caractérisé en ce qu'il comprend les étapes principales suivantes consistant à :
(I) obtenir dans une deuxième mémoire, à partir du SOMMAIRE du guide, un SOMMAIRE MODIFIE ne contenant que les informations du SOMMAIRE relatives à tout ou partie des chaînes reçues par le téléviseur telles qu'identifiées dans la première mémoire, et
(II) enregistrer uniquement les blocs de données du CONTENU du guide dans une troisième mémoire lorsqu'ils correspondent à tout ou partie des chaînes reçues par le téléviseur.

L'étape principale (I) comprend les étapes suivantes consistant à :
(a) enregistrer le SOMMAIRE ou une partie de celui-ci dans une mémoire tampon, à chaque retour de trame,
(b) comparer chaque code CNI du SOMMAIRE à la liste des codes CNI contenus dans la première mémoire,
(c) transférer le code CNI reçu et les numéros d'identification ID de blocs de données associés dans la deuxième mémoire uniquement en cas d'identité de manière à créer un SOMMAIRE MODIFIE,
(d) retourner à l'étape (b) pour traiter le code CNI suivant ou à l'étape (a) pour enregistrement du SOMMAIRE,

L'étape principale (II) comprend les étapes suivantes consistant à :
(e) enregistrer au moins un bloc de données et son numéro d'identification ID dans la mémoire tampon,
(f) comparer le numéro d'identification ID du bloc de données aux numéros d'identification ID enregistrés dans la deuxième mémoire,
(g) transférer le bloc de données, son numéro d'identification ID ainsi que le code CNI correspondant dans la troisième mémoire uniquement en cas d'identité, et
(h) retourner à l'étape (f) pour traiter le numéro d'identification suivant ou à l'étape (e) pour enregistrer les bloc(s) de données de la trame suivante.

L'invention concerne également un dispositif de filtrage des données relatives à un guide électronique de programmes de télévision EPG dans un téléviseur qui comprend au moins :
- un dispositif de recherche automatique de chaînes fournissant dans une première mémoire une liste des codes CNI de tout ou partie des chaînes reçues par le téléviseur,
- une mémoire tampon pour enregistrer les informations relatives au guide EPG reçues pendant un retour de trame d'image télévision, et
- une troisième mémoire pour enregistrer, via la mémoire tampon, les informations du guide EPG,
- un écran de téléviseur pour afficher les images de télévision ainsi que les informations du guide EPG, et
- un microcontrôleur pour fournir des signaux de commande de la mémoire tampon et de la troisième mémoire,
caractérisé en ce que ledit dispositif de filtrage comprend :
- des premiers moyens de comparaison pour comparer chaque code CNI du SOMMAIRE du guide EPG à la liste des codes CNI de tout ou partie des chaînes reçues par le téléviseur, tels qu'enregistrés dans la première mémoire,
- des moyens commandés par les moyens de comparaison, pour enregistrer dans une deuxième mémoire les codes CNI de tout ou partie des chaînes reçues ainsi que des numéros ID identifiant les blocs de données relatifs à chaque programme desdites chaînes reçues,
- des deuxièmes moyens de comparaison pour comparer chaque numéro d'identification ID d'un bloc de données reçu à la liste des numéros d'identification enregistrés dans la deuxième mémoire,
- des moyens , commandés par les deuxièmes moyens de comparaison, pour enregistrer dans la troisième mémoire les blocs de données dont les numéros d'identification ID correspondent à ceux enregistrés dans la deuxième mémoire ainsi que le code CNI de la chaîne et le numéro d'identification ID du bloc de données.

D'autres caractéristiques et avantages de la présente invention apparaîtront à la lecture de la description suivante d'un exemple particulier de réalisation, ladite description étant faite en relation avec les dessins joints dans lesquels :
- la figure 1 montre un schéma simplifié d'un dispositif de filtrage des données de programmes de chaînes de télévision selon l'invention,
- la figure 2 est un organigramme montrant les étapes du traitement d'un SOMMAIRE de guide EPG selon l'invention, et
- la figure 3 est un organigramme montrant les étapes du traitement du CONTENU du guide EPG selon l'invention.

Comme indiqué dans le préambule, les informations relatives aux programmes des chaînes sont transmises pendant le retour de trame pour constituer le guide électronique des programmes connu sous l'acronyme anglo-saxon "EPG" pour "Electronic Program Guide". Elles sont définies, en Europe, par la norme ETS 300-707/708 (ETS étant l'acronyme anglo-saxon pour "European Telecommunications Software").

Pour les besoins de la présente invention, la description de cette norme sera limitée aux éléments qui sont essentiels pour la compréhension.

Le contenu d'un guide EPG comprend deux parties : une première partie qui est appelée "SOMMAIRE" et une deuxième partie qui est appelée "CONTENU". Le SOMMAIRE contient au moins l'identité CNI (CNI étant l'acronyme anglo-saxon pour "Country Network Identification") des chaînes visées par le guide accompagnée chacune de deux références ou numéros ID identifiant, dans la partie CONTENU, le premier et le dernier blocs de données dont les données sont relatives à la chaîne identifiée par le code CNI. Ces couples de numéros du premier et du dernier blocs de données définissent une série de numéros consécutifs.

A titre de variante, l'invention s'applique également au cas où tous les numéros d'identification des blocs de données affectés à une chaîne sont transmis dans le SOMMAIRE.

La transmission d'un guide EPG commence d'abord par le SOMMAIRE suivi par le CONTENU, cette transmission s'effectuant trame après trame à raison d'environ 700 octets au maximum par trame. Il en résulte que la transmission du SOMMAIRE ou d'un bloc de données peut utiliser plusieurs retours de trame, ce qui implique qu'il existe en outre des éléments identifiant chaque retour de trame.

Dans les systèmes actuels de guide EPG, le SOMMAIRE est enregistré dans une mémoire afin de servir d'aiguillage pour les blocs de données du CONTENU et permettre l'affectation des blocs de données aux chaînes correspondantes par comparaison du numéro du bloc de données reçu avec les couples de numéros du premier et du dernier blocs accompagnant le code CNI de chaque chaîne dans le SOMMAIRE.

Ces blocs de données reçus sont enregistrés au fur et à mesure de leur réception dans une mémoire en les accompagnant du code CNI correspondant de sorte que des programmes et algorithmes permettront de présenter les données enregistrées sur l'écran du téléviseur selon des critères déterminés.

Il est à noter que la transmission d'un guide EPG peut prendre plusieurs dizaines de minutes de transmission.

Eu égard à la capacité limitée de la mémoire, il se peut que les blocs de données reçus en dernier ne puissent pas être enregistrés alors que les informations présentent de l'intérêt pour le téléspectateur.

Dans la norme ETS 300-707, it est prévu la possibilité de filtrage de l'information reçue au niveau du récepteur afin de s'adapter à la taille de la mémoire. Cependant, aucum mode de réalisation n'est proposé.

Le document US 5,917,481-A décrit un tel mode de réalisation, l'information reçue n'étant mise en mémoire que si elle se rapporte à des canaux de télévision préalablement sélectionnés par l'utilisateur.

Selon l'invention, il est proposé de filtrer les blocs de données reçus de manière à n'enregistrer , selon certains critères, que ceux qui correspondent à des chaînes présentant de l'intérêt pour le téléspectateur.

Un critère principal de filtrage, selon l'invention, est de ne s'intéresser qu'aux chaînes qui sont reçues par le téléviseur.

Bien entendu, on peut utiliser d'autres critères, par exemple les chaînes en une langue déterminée à condition que les chaînes soient répertoriées dans le SOMMAIRE selon ce critère. Mais ce critère de langue peut être précédé ou suivi du critère de la réception ou non de la chaîne par le téléviseur.

Le critère de réception ou non d'une chaîne est facile à mettre en oeuvre car ces informations sont créées à la mise en route du téléviseur chez le téléspectateur.

En effet, chaque téléviseur est équipé d'un dispositif de recherche automatique de chaînes qui permet de reconnaître automatiquement, par balayage du spectre de fréquences, les chaînes susceptibles d'être reçues à la position géographique du téléviseur et d'en enregistrer les caractéristiques d'identification, notamment le code CNI. Cette opération est connue sous le terme anglo-saxon "TUNING". Ces caractéristiques d'identification sont enregistrées dans une mémoire semi-permanente du type EEPROM, acronyme de l'expression anglo-saxonne "Electrically Erasable and Programmable Read Only Memory".

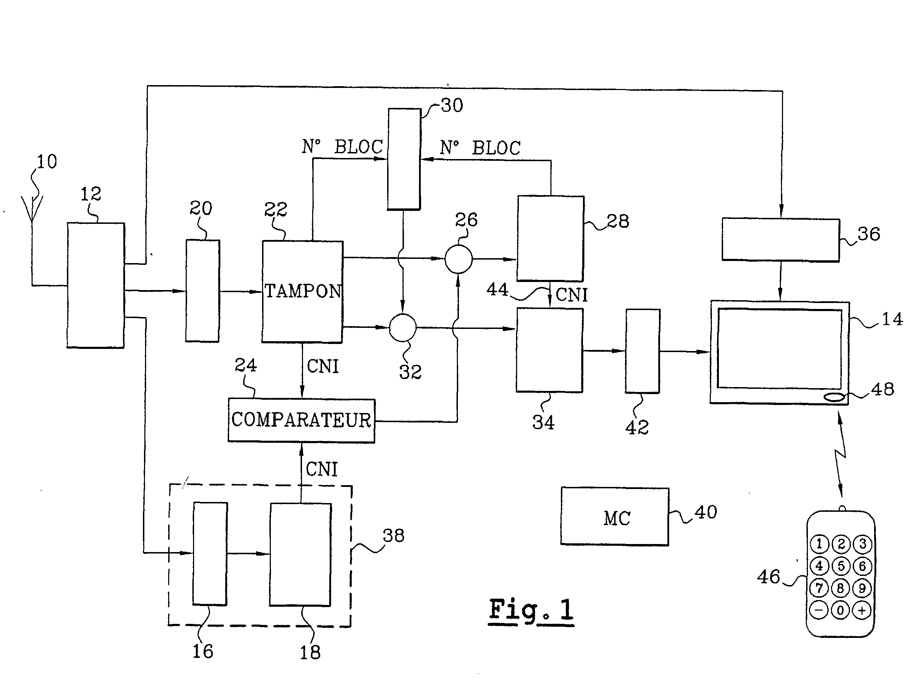

Sur le schéma simplifié de la figure 1, le signal télévision est détecté par une antenne 10 et est dirigé vers un récepteur 12. A la sortie du récepteur 12, un premier signal est appliqué à un dispositif de traitement 36 qui affiche l'image sur l'écran 14.

Un deuxième signal est appliqué à un dispositif 38 de recherche automatique de chaînes qui réalise la détection des chaînes par un circuit 16 et l'enregistrement des caractéristiques d'identification de ces chaînes (codes CNI) dans une première mémoire 18 indiquée ci-dessus.

Un troisième signal, celui transmis pendant le retour de trame, est appliqué à un circuit démodulateur 20 qui fournit des codes binaires selon la norme citée ci-dessus. Ces codes binaires sont enregistrés dans une mémoire tampon 22 dont la capacité est prévue pour permettre l'enregistrement du nombre maximal d'octets transmis dans un retour de trame, soit environ 700 octets.

A chaque nouveau retour de trame, la mémoire tampon 22 est réenregistrée avec les nouveaux codes binaires reçus.

Pendant l'intervalle de temps entre deux trames successives, le contenu de la mémoire tampon doit être traité selon les caractéristiques du procédé de l'invention, le procédé étant mis en oeuvre par un microcontrôleur 40, MC dont les signaux commandent les éléments affectés à l'invention.

Les éléments affectés à la mise en oeuvre de l'invention sont, en plus du microcontrôleur 40, MC et de la mémoire tampon 22, une mémoire 28 (la deuxième mémoire indiquée ci-dessus) dite de SOMMAIRE MODIFIE, une mémoire 34 (la troisième mémoire indiquée ci-dessus) qui constitue la mémoire d'affichage du guide sur l'écran 14 du téléviseur, via un circuit d'affichage 42.

Le dispositif selon l'invention comprend aussi des portes électroniques de transfert 26 et 32 de la mémoire tampon vers la mémoire 28 et la mémoire 34 et des comparateurs 24 et 30 qui comparent certains des codes contenus dans la mémoire tampon à des codes correspondants contenus dans les mémoires 18 et 28 selon le cas. Les signaux fournis par ces comparateurs 24 et 30 commandent respectivement l'ouverture ou la fermeture des portes électroniques 26 et 32.

Il est à remarquer que les comparateurs 24 et 30 peuvent être réalisés sous une forme logicielle à l'aide d'un sous-programme du microcontrôleur 40, MC, auxquels cas les portes électroniques 26 et 32 sont commandées par le microcontrôleur.

Lorsque le microcontrôleur détecte dans la mémoire tampon 22 le SOMMAIRE d'un guide EPG, il compare (comparateur 24) chaque code CNI à ceux contenus dans la mémoire 18. En cas d'identité, le code CNI de la chaîne dont le signal est reçu par le téléviseur est enregistré dans la deuxième mémoire 28 via symboliquement les portes électroniques 26 dont l'ouverture est commandée par le signal d'identité du comparateur 24. Ce code CNI est accompagné du couple de numéros ID des premier et dernier blocs de données affectés au CONTENU pour la chaîne identifiée par le code CNI.

En l'absence d'identité, c'est-à-dire en l'absence de réception de la chaîne, le code CNI correspondant à cette chaîne et le couple de numéros ID des premier et dernier blocs de données du CONTENU ne sont pas transférés dans la mémoire 28.

Par suite de ce fonctionnement, à la fin de la réception du SOMMAIRE du guide EPG, la mémoire 28 ne contiendra que les codes CNI et les couples de numéros ID des blocs de données correspondant à des chaînes dont les signaux peuvent être détectés par le téléviseur, c'est-à-dire celles répertoriées dans la mémoire 18.

Il en résulte que la mémoire 28 contient un SOMMAIRE MODIFIE.

Après la réception du SOMMAIRE du guide EPG, le téléviseur reçoit le CONTENU du guide sous forme de blocs de données identifiés par les numéros ID. Ces blocs de données sont enregistrés avec leur numéro ID dans la mémoire tampon 22 au fur et à mesure de leur réception trame après trame. Après l'enregistrement d'un ou plusieurs blocs de données correspondant à un retour de trame, chaque numéro ID de bloc de données est comparé, dans le comparateur 30, aux séries de numéros des blocs données du SOMMAIRE MODIFIE contenus dans la mémoire 28.

En cas d'identité, le comparateur 30 fournit un signal qui ouvre les portes électroniques 32 afin de transférer le bloc de données de la mémoire tampon 22 vers la mémoire 34 où il est affecté à la chaîne à laquelle il correspond, par exemple en l'associant au code CNI comme le montre la flèche 44 entre la mémoire 28 et la mémoire 34.

En l'absence d'identité entre le numéro d'un bloc de données contenu dans la mémoire tampon 22 et l'un des numéros des séries de numéros de blocs de données, le transfert du bloc de données vers la mémoire 34 n'a pas lieu.

Ces opérations de comparaison et de transfert vers la mémoire 34 sont sous le contrôle du microcontrôleur 40, les comparaisons pouvant d'ailleurs être réalisées par le microcontrôleur comme indiqué ci-dessus.

Lorsque tout le guide EPG a été reçu et traité selon la description ci-dessus, la mémoire 34 ne contient que les données de programmes relatives aux chaînes identifiées par leur code CNI enregistré dans la mémoire 18, c'est-à-dire celles qui peuvent être reçues.

Les blocs de données contenus dans la mémoire 34 peuvent alors être traités à l'aide de programmes et d'algorithmes mis en oeuvre de manière connue par le microcontrôleur 40 à la demande du téléspectateur via une télécommande 46 coopérant avec un récepteur 48 sur le téléviseur 14.

Après un traitement, par exemple pour obtenir les films à une date déterminée, les informations triées sont présentées sur l'écran du téléviseur 14 via un circuit d'affichage 42 également commandé par le microcontrôleur 40.

Pour des raisons de clarté, on n'a pas représenté sur la figure 1, les liaisons fonctionnelles du microcontrôleur 40 vers les autres éléments du dispositif.

La description qui vient d'être faite du dispositif selon l'invention et de son fonctionnement permet de définir les différentes étapes d'un procédé qui comprend deux parties ou étapes principales, la première consistant en des étapes de traitement du SOMMAIRE et la deuxième consistant en des étapes de traitement du CONTENU.

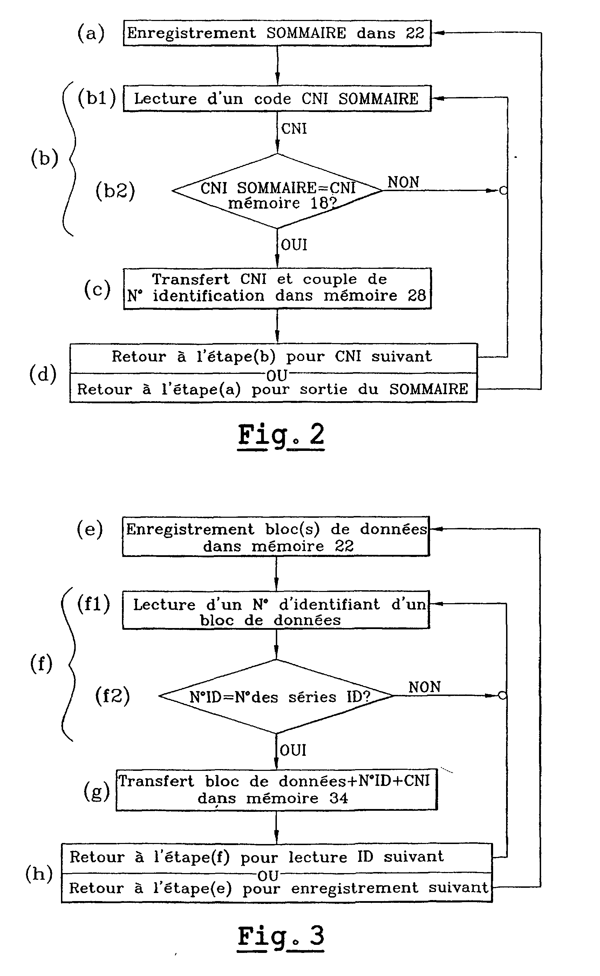

Pour le traitement du SOMMAIRE, les étapes consistent à (figure 2) :
(a) enregistrer (20) le SOMMAIRE ou une partie de celui-ci dans la mémoire tampon 22, à chaque retour de trame,
(b) comparer (24) un code CNI du SOMMAIRE à la liste des codes CNI contenus dans la première mémoire 18,
(c) transférer (26) le code CNI reçu et les couples de numéros d'identification ID de blocs de données associés dans la deuxième mémoire 28 uniquement en cas d'identité de manière à créer un SOMMAIRE MODIFIE,
(d) retourner à l'étape (b) pour traiter le code CNI suivant ou à l'étape (a) pour enregistrement du SOMMAIRE.

Pour le traitement du CONTENU, les étapes consistent à (figure 3) :
(e) enregistrer (20) au moins un bloc de données, et son numéro d'identification ID dans la mémoire tampon 22,
(f) comparer (30) le numéro d'identification ID du bloc de données aux séries définies par les couples de numéros d'identification ID enregistrés dans la deuxième mémoire 28,
(g) transférer le bloc de données, son numéro d'identification ainsi que le code CNI correspondant dans la troisième mémoire 34 uniquement en cas d'identité, et
(h) retourner à l'étape (f) pour traiter le numéro d'identification suivant ou à l'étape (e) pour enregistrement de bloc(s) de données de la trame suivante.

Sur la figure 2, l'étape (b) a été représentée en deux sous-étapes, l'une (b1) de lecture d'un code CNI du SOMMAIRE et l'autre (b2) de comparaison de ce code lu à la liste des codes CNI contenus dans la première mémoire 18.

De manière similaire sur la figure 3, l'étape (f) a été représentée en deux sous-étapes, l'une (f1) de lecture d'un numéro d'identification ID d'un bloc de données contenu dans la mémoire tampon 22 et l'autre (f2) de comparaison de ce numéro ID aux numéros des séries de blocs de données définis par le SOMMAIRE.

L'invention a été décrite dans son application à un téléviseur qui comprend un circuit de recherche automatique des chaînes reçues qui fournit dans une mémoire 18 les codes CNI des chaînes reçues. Elle s'applique aussi au cas où, parmi les chaînes reçues, le téléspectateur se limite à certaines d'entre elles, celles qui l'intéressent.

Dans ce cas, le téléspectateur a la possibilité de ne garder que les codes CNI des chaînes qu'il sélectionne en agissant sur la mémoire 18 via la télécommande 46 et le microcontrôleur 40.

Une telle solution permet également d'adapter le dispositif d'invention à la taille de la mémoire 34 en limitant le nombre de chaînes traitées à 10, 20 ou plus de chaînes.

## Revendications

1. Procédé de filtrage des données relatives à un guide électronique de programmes (EPG) dans un téléviseur et transmises sous la forme d'un SOMMAIRE suivi d'un CONTENU, le SOMMAIRE indiquant pour chaque chaîne le code CNI de la chaîne et des numéros d'identification ID de blocs de données transmis avec le CONTENU, ledit téléviseur comprenant un dispositif de recherche automatique de chaînes de télévision (38) fournissant dans une première mémoire (18) une liste des codes CNI de tout ou partie des chaînes reçues par le téléviseur, **caractérisé en ce qu'**il comprend les étapes principales consistant à :
(I) obtenir dans une deuxième mémoire (28), à partir du SOMMAIRE du guide, un SOMMAIRE MODIFIE ne contenant que les informations du SOMMAIRE relatives à tout ou partie des chaînes reçues par le téléviseur telles qu'identifiées dans la première mémoire, et
(II) enregistrer uniquement les blocs de données du CONTENU du guide dans une troisième mémoire (34) lorsqu'ils correspondent à des numéros d'identification (ID) du SOMMAIRE MODIFIE contenus dans la deuxième mémoire.

2. Procédé selon la revendication 1, **caractérisé en ce que** l'étape principale (I) comprend les étapes suivantes consistant à :
(a) enregistrer (20) le SOMMAIRE ou une partie de celui-ci dans une mémoire tampon (22), à chaque retour de trame,
(b) comparer (24) chaque code CNI du SOMMAIRE à la liste des codes CNI contenus dans la première mémoire (18),
(c) transférer (26) le code CNI reçu et les numéros d'identification de blocs de données associés dans la deuxième mémoire (28) uniquement en cas d'identité de manière à créer le SOMMAIRE MODIFIE,
(d) retourner à l'étape (b) pour traiter le code CNI suivant ou à l'étape (a) pour enregistrement du reste du SOMMAIRE,

3. Procédé selon la revendication 2, **caractérisé en ce que** l'étape (b) comprend deux sous-étapes consistant à :
(b1) lire dans la mémoire tampon (22) un code CNI du SOMMAIRE, et
(b2) comparer ce code CNI lu à la liste des codes CNI contenus dans la mémoire (18).

4. Procédé selon l'une des revendications 1, 2 ou 3, **caractérisé en ce que** l'étape principale (II) comprend les étapes suivantes consistant à :
(e) enregistrer (20) au moins un bloc de données du CONTENU et son numéro d'identification (ID) dans la mémoire tampon (22),
(f) comparer (30) le numéro d'identification (ID) du bloc de données enregistré dans la mémoire tampon (22) aux numéros d'identification (ID) enregistrés dans la deuxième mémoire (28),
(g) transférer le bloc de données, son numéro d'identification ainsi que le code CNI correspondant dans la troisième mémoire (34) uniquement en cas d'identité, et
(h) retourner à l'étape (f) pour traiter le numéro d'identification du bloc de données suivant ou à l'étape (e) pour l'enregistrement de bloc(s) de données de la trame suivante.

5. Procédé selon la revendication 4, **caractérisé en ce que** l'étape (f) comprend deux sous-étapes consistant à :
(f1) lire un numéro d'identification (ID) d'un bloc de données contenu dans la mémoire tampon (22), et
(f2) comparer ce numéro d'identification (ID) aux numéros d'identification du SOMMAIRE MODIFIE enregistrés dans la deuxième mémoire (28).

6. Procédé selon l'une des revendications 4 ou 5 dans le cas où les numéros d'identification (ID) associés à chaque code CNI correspondent aux numéros d'identification des premier et dernier numéros d'identification (ID) de la série de blocs de données affectée à une chaîne, **caractérisé en ce que** l'opération (f) consiste à comparer le numéro d'identification (ID) du bloc de données reçu à chaque numéro d'identification de la série de numéros affectée à une chaîne.

7. Dispositif pour mettre en oeuvre le procédé selon l'une des revendications 1 à 6 dans un téléviseur qui comprend au moins :
- un dispositif de recherche automatique de chaînes (38) fournissant dans une première mémoire (18) une liste des codes CNI de tout ou partie des chaînes reçues par le téléviseur,
- une mémoire tampon (22) pour enregistrer les informations relatives au guide (EPG) reçues pendant un retour de trame d'image télévision,
- une troisième mémoire (34) pour enregistrer, via la mémoire tampon (22), les informations du guide EPG,
- un écran de téléviseur (14) pour afficher les images de télévision ainsi que les informations du guide EPG, et
- un microcontrôleur (40, MC) pour fournir des signaux de commande de la mémoire tampon (22) et des première et troisième mémoires (18, 34),
**caractérisé en ce que** ledit dispositif de filtrage comprend :
- des premiers moyens de comparaison (24 ou 40) pour comparer chaque code CNI du SOMMAIRE du guide EPG à la liste des codes CNI de tout ou partie des chaînes reçues par le téléviseur, tels qu'enregistrés dans la première mémoire (18),
- des moyens (26, 40), commandés par les premiers moyens de comparaison (24, 40), pour enregistrer dans une deuxième mémoire (28) les codes CNI de tout ou partie des chaînes reçues ainsi que des numéros (ID) identifiant les blocs de données relatifs au programme desdites chaînes reçues,
- des deuxièmes moyens de comparaison (30, 40) pour comparer chaque numéro d'identification (ID) d'un bloc de données reçu à la liste des numéros d'identification enregistrés dans la deuxième mémoire (28),
- des moyens (32, 40), commandés par les deuxièmes moyens de comparaison, pour enregistrer dans la troisième mémoire (34) les blocs de données dont les numéros d'identification (ID) correspondent à ceux enregistrés dans la deuxième mémoire (28) ainsi que le code CNI de la chaîne et le numéro d'identification (ID) du bloc de données.

8. Dispositif selon la revendication 7, **caractérisé en ce qu'**il comprend, en outre, des moyens (46, 48, 40, 38) pour permettre au téléspectateur de sélectionner dans la première mémoire (18) les chaînes qui l'intéressent.

## Patentansprüche

1. Verfahren zum Filtern von Daten, die sich auf eine elektronische Programmführung (EPG) in einem Fernseher beziehen, wobei diese Programmführung zusammen mit einem INHALT in Form einer ÜBERSICHT übertragen wird, und die ÜBERSICHT für jeden Kanal den CNI-Code (country network identification-code) des Kanals und die Blockidentifikationsnummern der mit dem INHALT übertragenen Datenblöcke angibt, und der Fernseher eine Vorrichtung zur automatischen Fernsehkanalsuche (38) umfaßt, die eine Liste von CNI-Codes aller oder eines Teils der von dem Fernseher empfangenen Kanäle für einen ersten Speicher (18) vorsieht, **dadurch gekennzeichnet, daß** das Verfahren die folgenden Hauptschritte umfaßt:
(I) Erhalten einer MODIFIZIERTEN ÜBERSICHT ausgehend von der ÜBERSICHT der Führung in einem zweiten Speicher (28), wobei die MODIFIZIERTE ÜBERSICHT nur Informationen der ÜBERSICHT enthält, die sich insgesamt oder zum Teil auf die von dem Fernseher empfangenen Kanäle beziehen, die in dem ersten Speicher genannt sind, und
(II) Speichern nur der Datenblöcke des INHALTS der Führung in einem dritten Speicher (34), wenn diese den Identifikationsnummern (ID) der MODIFIZIERTEN ÜBERSICHT entsprechen, die in dem zweiten Speicher enthalten sind.

2. Verfahren nach Anspruch 1, **dadurch gekennzeichnet, daß** der Hauptschritt (I) die folgenden Schritte umfaßt:
(a) Speichern (20) der ÜBERSICHT oder eines Teils davon bei jedem Bildrücklauf in einen Pufferspeicher (22),
(b) Vergleichen (24) jedes CNI-Codes der ÜBERSICHT mit der CNI-Codeliste, die sich in dem ersten Speicher (18) befindet,
(c) Übertragen (26) des empfangenen CNI-Codes und der Blockidentifikationsnummern der Datenblöcke, die mit dem zweiten Speicher (28) eindeutig verknüpft sind, wenn die Erzeugungsarten der MODIFIZIERTEN ÜBERSICHT übereinstimmen,
(d) Zurückspringen zu Schritt (b), um den folgenden CNI-Code zu verarbeiten, oder zu Schritt (a), um den Rest der ÜBERSICHT zu speichern.

3. Verfahren nach Anspruch 2, **dadurch gekennzeichnet, daß** der Schritt (b) die zwei folgenden Unterschritte umfaßt:
(b1) Lesen eines CNI-Codes der ÜBERSICHT aus dem Pufferspeicher (22) und
(b2) Vergleichen des gelesenen CNI-Codes mit der Liste der CNI-Codes, die sich in dem Speicher (18) befinden.

4. Verfahren nach einem der Ansprüche 1, 2 oder 3, **dadurch gekennzeichnet, daß** der Hauptschritt (II) die folgenden Schritte umfaßt:
(e) Speichern (20) mindestens eines Datenblocks des INHALTS und dessen Identifikationsnummer (ID) in dem Pufferspeicher (22),
(f) Vergleichen (30) der Identifikationsnummer (ID) des in den Pufferspeicher (20) gespeicherten Datenblocks mit den Identifikationsnummern (ID), die in dem zweiten Speicher (28) gespeichert sind,
(g) Übertragen des Datenblocks, seiner Identifikationsnummer und des jeweiligen CNI-Codes in den dritten Speicher (34) nur im Fall der Übereinstimmung, und
(h) Zurückkehren zu Schritt (f), um die Identifikationsnummer des folgenden Datenblocks zu verarbeiten, oder Zurückkehren zu Schritt (e), um den (die) Datenblock (-blöcke) des folgenden Bilds zu speichern.

5. Verfahren nach Anspruch 4, **dadurch gekennzeichnet, daß** der Schritt (f) die folgenden zwei Unterschritte umfaßt:
(f1) Lesen der Identifikationsnummer (ID) eines Datenblocks, der sich in dem Pufferspeicher (22) befindet, und
(f2) Vergleichen dieser Identifikationsnummer (ID) mit den Identifikationsnummern der MODIFIZIERTEN ÜBERSICHT, die in dem zweiten Speicher (28) gespeichert sind.

6. Verfahren nach einem der Ansprüche 4 oder 5, wobei die Identifikationsnummern (ID), welche mit jedem CNI-Code verknüpft sind, mit den Identifikationsnummern der ersten und letzten Identifikationsnummern der Folge von Datenblöcken übereinstimmen, die einem Kanal zugeordnet sind, **dadurch gekennzeichnet, daß** der Arbeitsschritt (f) darin besteht, die Identifikationsnummer (ID) des empfangenen Datenblocks mit jeder Identifikationsnummer der Folge von Nummern zu vergleichen, die einem Kanal zugeordnet sind.

7. Vorrichtung zum Ausführen des Verfahrens nach einem der Ansprüche 1 bis 6 in einem Fernsehgerät, wobei diese umfaßt:
- eine automatische Kanalsuchvorrichtung (38), die eine Liste mit CNI-Codes aller oder eines Teils der von dem Fernsehgerät empfangenen Kanäle an einen ersten Speicher (18) liefert,
- einen Pufferspeicher (22), um die Daten zu speichern, die sich auf die während eines Bildrücklaufs empfangene Führung (Electronic Program Guide, EPG) des Fernsehbilds beziehen,
- einen dritter Speicher (34), um über den Pufferspeicher (22) die Informationen der EPG-Führung zu speichern,
- einen Fernsehbildschirm (14), um sowohl Fernsehbilder als auch Informationen der EPG-Führung darzustellen und
- einen Mikrocontroller (40, MC), der Befehlssignale an den Pufferspeicher (22) und an den ersten und an den dritten Speicher (18, 34) liefert,
**dadurch gekennzeichnet, daß** die Filtervorrichtung umfaßt:
- erste Vergleichsmittel (24 oder 40), um jeden CNI-Code der ÜBERSICHT der EPG-Führung mit der Liste der CNI-Codes aller oder eines Teils der von dem Fernsehgerät empfangenen Kanäle zu vergleichen, die in dem ersten Speicher (18) gespeichert sind,
- Mittel (26, 40), die von den ersten Vergleichsmittel (24, 40) gesteuert werden, um in einem zweiten Speicher (28) die CNI-Codes aller oder eines Teils der empfangenen Kanäle sowie die Nummern (ID) zu speichern, die die Datenblöcke in Bezug auf das Programm der empfangenen Kanäle angeben,
- zweite Vergleichsmittel (30, 40), um jede Identifikationsnummer (ID) eines empfangenen Datenblocks mit der Liste der Identifikationsnummern zu vergleichen, die in dem zweiten Speicher (28) gespeichert sind,
- Mittel (32, 40), die von dem zweiten Vergleichsmittel gesteuert werden, um in dem dritten Speicher (34) diejenigen Datenblöcke zu speichern, deren Identifikationsnummern (ID) denjenigen entsprechen, welche in dem zweiten Speicher (28) gespeichert sind, und um den CNI-Code des Kanals und die Identifikationsnummer (ID) des Datenblocks zu speichern.

8. Vorrichtung nach Anspruch 7, **dadurch gekennzeichnet, daß** diese ferner Mittel (46, 48, 40, 38) umfaßt, die es dem Fernsehzuschauer gestatten, aus dem ersten Speicher (18) die Kanäle auszuwählen, die ihn interessieren.

## Claims

1. Method of filtering data relating to an electronic programme guide (EPG) in a television set and transmitted in the form of a SUMMARY followed by a CONTENT, the SUMMARY indicating, for each channel, the CNI code of the channel and identification numbers ID of data blocks transmitted with the CONTENT, said television set comprising a device for automatically searching for television channels (38) supplying, to a first memory (18), a list of the CNI codes for all or some of the channels received by the television set, **characterised in that** it comprises the main steps consisting in:
(I) obtaining from a second memory (28), on the basis of the SUMMARY of the guide, a MODIFIED SUMMARY containing only the information of the SUMMARY that relate to all or some of the channels received by the television set as identified in the first memory, and
(II) recording only the data blocks of the CONTENT of the guide in a third memory (34) when they correspond to identification numbers (ID) of the MODIFIED SUMMARY contained in the second memory.

2. Method according to Claim 1, **characterised in that** the main step (I) comprises the following steps consisting in:
(a) recording (20) the SUMMARY or part thereof in a buffer memory (22), at each vertical flyback,
(b) comparing (24) each CNI code of the SUMMARY with the list of CNI codes contained in the first memory (18),
(c) transferring (26) the received CNI code and the identification numbers of the associated data blocks into the second memory (28) only where they are identical so as to create the MODIFIED SUMMARY,
(d) returning to step (b) in order to process the next CNI code or to step (a) in order to record the rest of the SUMMARY.

3. Method according to Claim 2, **characterised in that** step (b) comprises two substeps consisting in:
(b1) reading from the buffer memory (22) a CNI code of the SUMMARY, and
(b2) comparing this read CNI code with the list of CNI codes contained in the memory (18).

4. Method according to one of Claims 1, 2 or 3, **characterised in that** the main step (II) comprises the following steps consisting in:
(e) recording (20) at least one data block of the CONTENT and its identification number (ID) in the buffer memory (22),
(f) comparing (30) the identification number (ID) of the data block recorded in the buffer memory (22) with the identification numbers (ID) recorded in the second memory (28),
(g) transferring the data block, its identification number and also the corresponding CNI code into the third memory (34) only where they are identical, and
(h) returning to step (f) in order to process the identification number of the next data block or to step (e) in order to record data block(s) of the next field.

5. Method according to Claim 4, **characterised in that** step (f) comprises two substeps consisting in:
(f1) reading an identification number (ID) of a data block contained in the buffer memory (22), and
(f2) comparing this identification number (ID) with the identification numbers of the MODIFIED SUMMARY recorded in the second memory (28).

6. Method according to one of Claims 4 or 5 where the identification numbers (ID) associated with each CNI code correspond to the identification numbers of the first and last identification numbers (ID) of the series of data blocks allocated to a channel, **characterised in that** the operation (f) consists in comparing the identification number (ID) of the data block received with each identification number of the series of numbers allocated to a channel.

7. Device for implementing the method according to one of Claims 1 to 6 in a television set that comprises at least:
a device for automatically searching for channels (38) supplying to a first memory (18) a list of CNI codes for all or some of the channels received by the television set,
a buffer memory (22) for recording the information relating to the guide (EPG) received during a vertical flyback of the television image,
a third memory (34) for recording, via the buffer memory (22), the information from the EPG guide,
a television screen (14) for displaying the television pictures and also the information from the EPG guide, and
a microcontroller (40, MC) for supplying control signals for the buffer memory (22) and for the first and third memories (18, 34),
**characterised in that** said filtering device comprises:
first comparison means (24 or 40) for comparing each CNI code of the SUMMARY of the EPG guide with the list of CNI codes for all or some of the channels received by the television set, as recorded in the first memory (18),
means (26, 40), controlled by the first comparison means (24, 40), for recording in a second memory (28) the CNI codes of all or some of the channels received as well as numbers (ID) identifying the data blocks relative to the programme of said received channels,
second comparison means (30, 40) for comparing each identification number (ID) of a received data block with the list of identification numbers recorded in the second memory (28),
means (32, 40), controlled by the second comparison means, for recording in the third memory (34) the data blocks for which the identification numbers (ID) correspond to those recorded in the second memory (28) and also the CNI code for the channel and the identification number (ID) of the data block.

8. Device according to Claim 7, **characterised in that** it further comprises means (46, 48, 40, 38) for allowing the viewer to select from the first memory (18) the channels that are of interest to him.
